# EUROPEAN PATENT APPLICATION

(11) **EP 1 614 820 A1**
(43) Date of publication of application: **11.01.2006**
(21) Application number: 04024319.8
(22) Date of filing: 12.10.2004
(51) Int. Cl.: E04B 2/74

(54) **Partition wall system for offices and the like**

(30) Priority: 07.07.2004 DE 102004032866
(71) Applicant: Steelcase S.A., 67200 Strasbourg (FR)
(72) Inventor: Viegas, Luis, 67310 Wasselonne (FR); Oberle, Jean Marc, 67310 Cosswiller (FR)
(74) Representative: GROSSE BOCKHORNI SCHUMACHER

(57) **Abstract**

Partition wall system for offices and the like based on laterally closable partition wall elements, each of which is formed from two uprights and cross-beams that interconnect them, which are formed of hollow profiles, particularly formed by multi chamber profiles, whereby at least a part of the cross-beams of the system is connectable on both sides of its end-faces to lateral connecting rods to form a self-contained assembly unit (so-called fence), which may be releasably fastened to adjacent uprights via said lateral connecting rods and has at least one ribbon defined by two adjacent cross-beams and that the uprights are provided with slots continuous over the length for accommodating connecting rods, into which slots the connecting rods are insertable.

## Description

The invention relates to a partition wall system for offices and the like with laterally closable partition wall elements according to the preamble of claim 1.

Partition wall system for offices and the like are as a rule made of several partition wall elements that can be connected to one another in various configurations, to design corresponding work places in offices. Essential criteria for such partition wall systems are easy assembly, broad variability, so that modifications are possible later on, as well as appealing optical design, so that additional claddings and covers of such partition wall elements are not required. Corresponding partition wall systems are generally known, as e.g. from US-PS 5,394,658 describing partition wall elements that are formed by vertical uprights, which are connected to one another by profile-like cross-beams. The actual visible surface of the partition wall elements is formed by panel walls that can be clipped on and which basically result in a flush formation of both front surfaces of the partition wall elements. As it can be seen, the partition wall elements can be arranged in series along a plane for forming a partition wall, however, their end faces can also be arranged adjacent via a corner to one another, to create individually designed work places.

Furthermore, partition wall element systems (US 6,286,276 B1) are known, where the individual partition wall elements are each formed by individual modules arranged on top of one another, whereby each is formed by support frames comprising vertical profiled rods and transversal profiled rods. Corresponding panel walls can be clipped on both sides of the support frames. For forming the partition wall elements said modules are mounted on top of one another and are interconnected due to appropriate fastening means longitudinally to the transversal profiled rods. This leads to a broad variability of such a partition wall element system, however, structure and assembly are of a great extent. Corresponding support frame modules for forming partition wall elements are known from US-PS 4,631,881, that are formed by vertical profiled rods and therewith connected cross-profiles, which are interlocked for forming the frame element. Said frame elements are screwed together with vertical support frames, that are provided with corresponding openings along the entire length of the rod. For forming the partition wall elements said modules are mounted on top of one another, screwed together, whereby the vertical profiled rods are then accommodated in a hollow profile, that is made of two halves and can be clipped together, and are encased therewith.

US 6,367,213 B1 describes partition wall elements, where each is formed by several spaced vertical profiled rods, that are interconnected by transversal profiled webs to a support frame. Consoles are mounted at appropriate height on the vertical support rods, onto which the panel wall can be clipped.

A partition wall element system is known from US-PS 5,524,402, where partition wall elements are formed by vertical profiled rods, that are interconnected via cross-beams to a support frame. The cross-beams are hereby multi-chamber hollow profiles. The cross-beams are hereby screwed or clenched together with the vertical profiled rods. The vertical profiled rods and the cross-beams can be extruded from metal, preferably aluminium. For forming the support frame, the profiled rods are length-over provided with fastening openings, that are equally spaced to one another. Furthermore both the end faces of the vertical profiled rods and the end faces of the cross-beams are provided with notches or slots for sticking the vertical profiled rods and the cross-beams together. The lateral connection of such partition wall elements for forming a partition wall is effected by separate vertical connection elements or profile-like vertical uprights, that are screwed together with the vertical profiled rods. This structure of such a partition wall element system is also of great extent and makes assembly complicated. Particularly the profiled rods and cross-beams formed by extrusion have to be provided on their end faces with corresponding connecting notches or connecting slots in a subsequent work step. The fastening openings on the vertical profiled rods also have to be produced in a separate work step.

Object of the invention is to create a partition wall system for offices and the like that enables quick and easy assembly on the spot, manages with preferably few assembly parts and features a broad variability.

The problem is solved according to invention by the features of the characterizing part of claim 1, whereby further developments of the invention for that purpose are characterized by the features in the sub-claims.

According to invention independent assembly units (so-called fences) are provided, that are formed by cross-beams and connecting rods, whereby the cross-beams are interconnected on both sides of their end faces with lateral connecting rods to form an assembly unit. Connection onto the uprights of the partition wall system is effected only via the lateral connecting rods, for which purpose the uprights are provided with continuous slots for accommodation of the connecting rods, in which the connecting rods are insertable and releasably fastened. According to invention both the cross-beams and the uprights can be produced by extrusion, preferably made of aluminium, however, due to engagement of the connecting rods of said fences with the continuous and longitudinally extending slots in the uprights and cross-beams, the end faces of the cross-beams and uprights do not need to be processed separately. Connection is rather only effected by connecting rods frontally adjacent to the cross-beams, that are without further ado insertable into corresponding slots of the uprights. Fastening of the connecting rods on the uprights is preferably effected by quick-action closure means, so that assembly on the spot is only effected by connecting and fastening of assembly units between adjacent uprights. The assembly units respectively fences may hereby be prefabricated in the plant, so that on the spot the assembly units only have to be inserted into the corresponding slots of the uprights and locked by the quick-action closure means. Demounting of such a partition wall system in case of work place modifications is therefore also easily possible any without further ado.

Practically the assembly units are formed as a type of fence by one or several ribbons arranged on top of one another. Hereby a fence, which is formed out of a ribbon, is formed out of two adjacent cross-beams, that are combined to an assembly unit by a connecting rod that is bridging the gap between the two adjacent cross-beams. Such assembly units respectively fences are provided preferably in units with one to three ribbons. In the case of two or three ribbons the assembly units comprise three or four cross-beams, that are on both sides respectively combined to an assembly unit by connecting rods, whereby the length of the connecting rods is respectively adapted to the height of the fence. Therefore a broad design of partition wall elements and partition walls formed therefrom is possible.

Practically both the uprights and the cross-beams are provided as multi-chamber hollow profiles are having slots in the side walls that are continuous over the length of the profiles, whereby said slots are adapted for that purpose and that preferably matching the width of the connecting rods. When mounting the assembly units and the partition wall element the connecting rods grip flush into the corresponding slots on the upright respectively the cross-beam, so that a stable fixation of the assembly unit and also of the partition wall element is effected. Due to this a strong load-bearing construction is made.

In a particularly advantageous embodiment of the invention the cross-beams are provided with continuous slots on the upper and lower end faces and the multi-chamber hollow profile of the cross-beams comprises between the slots a cross web that is continuous and provided with a bore, whereby the cross web can be used for the screw connection with the connecting rods, without separately working of the end faces. Furthermore, the connecting rods are provided with grooves that are spaced according to the width of a ribbon of the fence and that in longitudinal direction of the rod comprise a width, which is adapted to the thickness of the cross webs. Therefore the connecting rods can be laterally attached as an assembly unit for the purpose of connecting the cross-beams without any work on the end faces of the cross-beams involved, whereby the grooves of the connecting rods fittingly overlap the cross webs of the multi-chamber hollow profile of the cross-beams and whereby the connecting rod is laterally partially inserted into the upper and lower slots of the cross-beams. The protruding parts of the connecting rods then grip into the corresponding slots in the uprights to form the partition wall element. This leads to a good interlocking of the components without any work on the uprights and cross-beams involved, which only have to be cut to length. This leads to a high variability. The formation of spaced fastening openings in uprights and cross-beams does not apply anymore, fastening is rather effected only by sticking the connecting rods into the cross-beams and uprights and subsequent locking by quick-action closure means, particularly quick-action closure means.

Practically the slots in the uprights and cross-beams are formed as undercut grooves and the quick-action closure means comprise corresponding locking heads, that have a shorter width on their narrow side than the slot width in the uprights and cross-beams, however, are longer in their longitudinal direction than the slot width. Due to that the connecting rods can be inserted with the locking heads into the slots of the uprights, after which the locking of the connecting rods onto the uprights is effected by simply rotating the locking heads, whereby the locking heads then grip behind the undercut grooves in the uprights.

In a particularly advantageous way the closure elements are furthermore formed as quick-action closure elements, that can be connected with the uprights by clamping effect, and the closure elements are unreleasably mounted to the connecting rods, so that the assembly units together with the closure elements may be prefabricated in the plant. Then, on the spot without any further additional fastening means the assembly unit just has to be inserted via the connecting rods into the uprights and the closure elements that are mounted on the connecting rods are to be rotated correspondingly, so that clamping with the uprights is effected.

Embodiments of a partition wall system are described below with the aid of the drawing. In it,
- Fig. 1: is a three-dimensional partial view of a partition wall element of the system,
- Fig. 2: is a three-dimensional partial view of a further embodiment of a partition wall element,
- Fig. 3: is a three-dimensional diagram of an assembly unit, termed "fence", of the partition wall element illustrated in Fig. 2,
- Fig. 4: is a further embodiment of a partition wall element with two ribbons,
- Fig. 5: is a sectional view through an embodiment of a cross-beam of the partition wall element system,
- Fig. 6: is a sectional view through an embodiment of a further cross-beam,
- Fig. 7: is a sectional view through an embodiment of a post, respectively of an upright of the system,
- Fig. 8: is a lateral view of an embodiment of a connecting link for an assembly unit with a ribbon,
- Fig. 9: is a front view of the connecting link shown in Fig. 8,
- Fig. 10: is an end-face view of the connecting link of Fig. 8,
- Fig. 11: is a three-dimensional view of a part of a connecting link with the accommodated quick-action closure element,
- Fig. 12: is a detailed view of a upright profile with the inserted quick-action closure element according to Fig. 11,
- Fig. 13: is a sectional view of the upright profile shown in Fig. 12 with inserted quick-action closure element in the locking position,
- Fig. 14: is a three-dimensional partial view of an upright profile with inserted quick-action closure element according the embodiments of Figs. 11 to 13,
- Fig. 15: is a lateral view of a further embodiment of a connecting link for forming a fence with two ribbons,
- Fig. 16: is a front-view of the connecting link of Fig. 15,
- Fig. 17: is a lateral view of a further embodiment of a connecting link for accommodating four cross-beams to form a fence with three ribbons,
- Fig. 18: is a front-view of the connecting link of Fig. 18,
- Fig. 19: is a schematic drawing of two spaced cross-beams for forming a ribbon with accommodated panel, and
- Fig. 20: is a sectional view of two spaced cross-beams of a ribbon with accommodated panel.
- Fig. 21: is a lateral view of the connecting link according to fig. 8 and 9 with therein taken up quick-action closure elements,
- Fig. 22: is a top plan view onto the embodiment according to fig. 21,
- Fig. 23: is a sectional view longitudinally to line A-A of fig. 21
- Fig. 24: is a lateral view of a portion of a quick-action closure element, namely studs with locking head,
- Fig. 25: is likewise a lateral view, however, rotated by 90°,
- Fig. 26: is a view of the locking head (50) according to fig. 25 seen from the right side,
- Fig. 27: is a detail A from fig. 15,

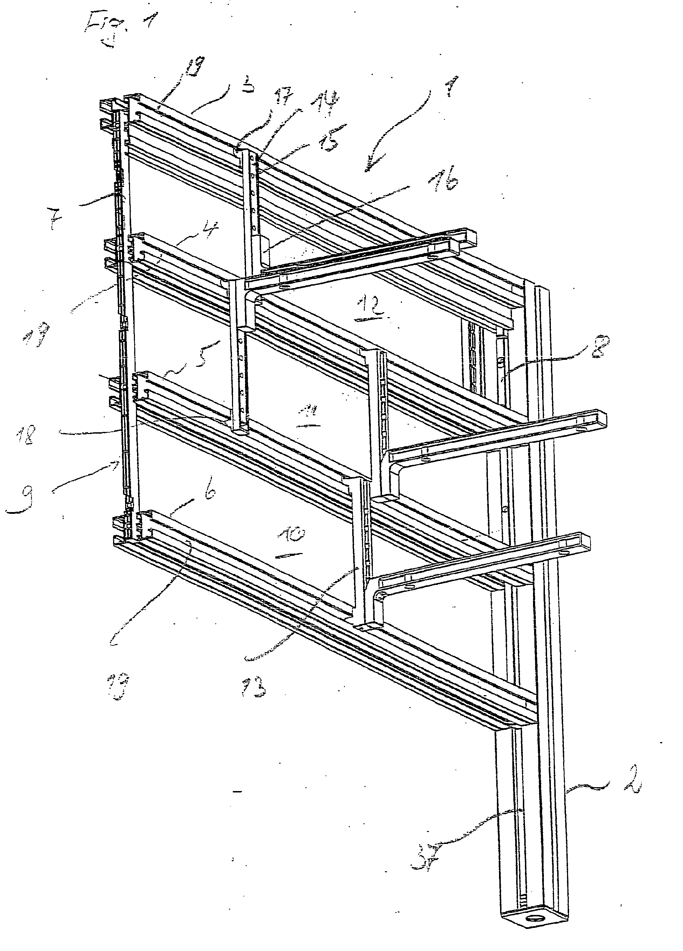

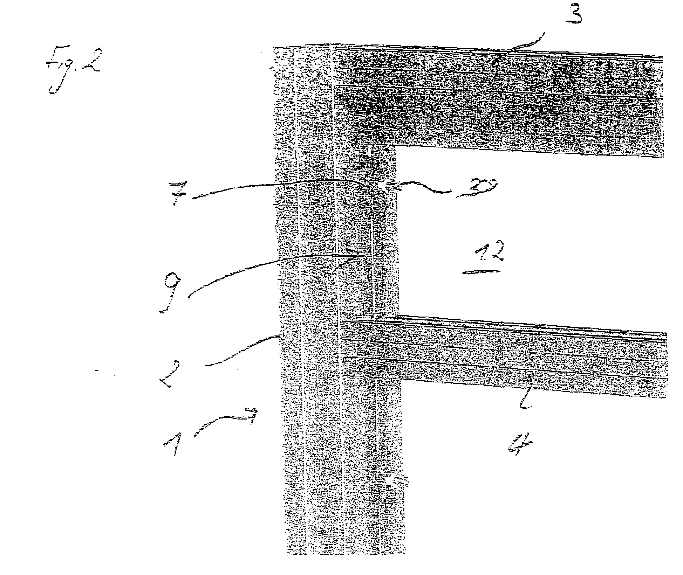

Fig. 1 is a purely schematic illustration of an embodiment of a partition wall element 1, which is constructed from two vertical posts or uprights 2, of which only the right-hand upright 2 is shown in Fig. 1, and from cross-beams 3, 4, 5, and 6 extending between the two posts or uprights 2. The end faces of cross-beams 3 to 6 are joined by two connecting links or rods 7 and 8 to form an assembly unit, which is called the fence unit or simply fence 9 and which can be attached to vertical uprights 2 via connecting rods 7 and 8. Connecting rods 7 and 8 are screwed to the end faces of cross-beams 3 to 6. Fence 9 in the embodiment of Fig. 1 thus comprises three so-called ribbons 10, 11 and 12, with each ribbon determined by two adjacent cross-beams, i.e. ribbon 10 by cross-beams 5 and 6. Adjacent ribbons are each connected by a common cross-beam, for example, ribbons 10 and 11 by cross-beam 5. To cross-beams 3 to 6 of fence 9 may be attached further components of a partition wall system by suitable fastening means, as exemplified by shelf bracket 13 positioned at the cross-beams, which bracket comprises a fastening support 14 with engagement holes 15 and a shelf arm 16, which can be connected to the engagement holes 15 via corresponding engagement formations. These shelf brackets 13, of which, for the sake of example only, four are shown in Fig. 1 in different arrangements at the cross-beams, serve to support shelves that are not illustrated. Fastening support 14 of shelf bracket 13 is hooked into or inserted into a slot 19, running the length of cross-beams 3 to 6, via a hook-in lip 17 formed at its upper end and an insert nose 18 formed at its lower end, with no other means of attachment being necessary for the shelf brackets, and these are otherwise slidable along slot 19 in a suitable alignment on the cross-beams.

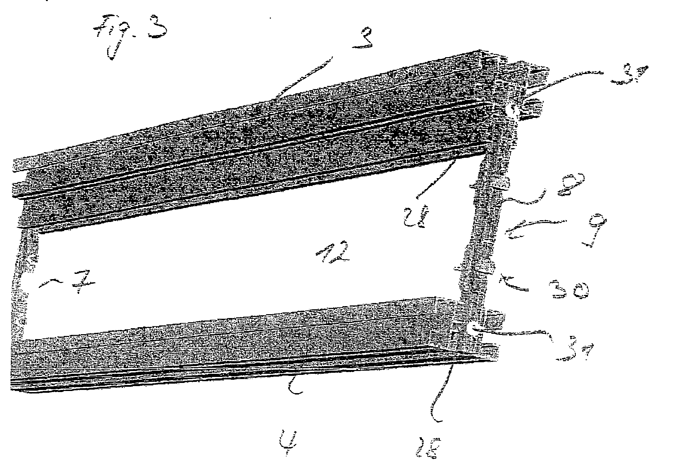

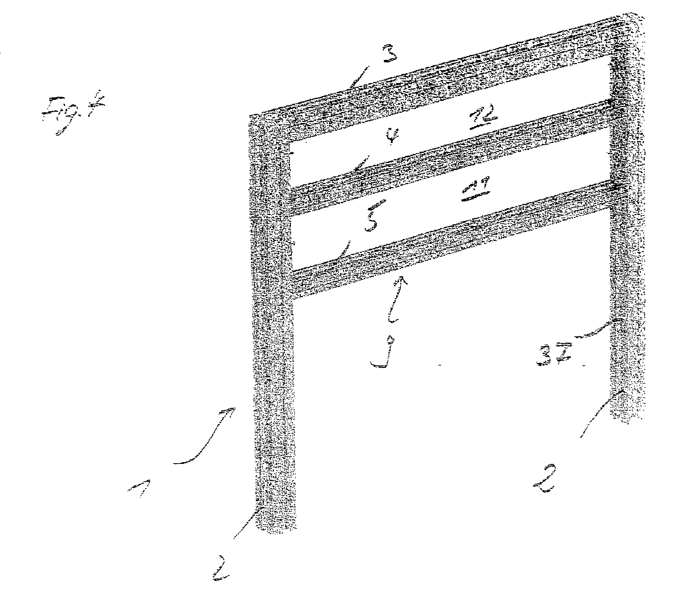

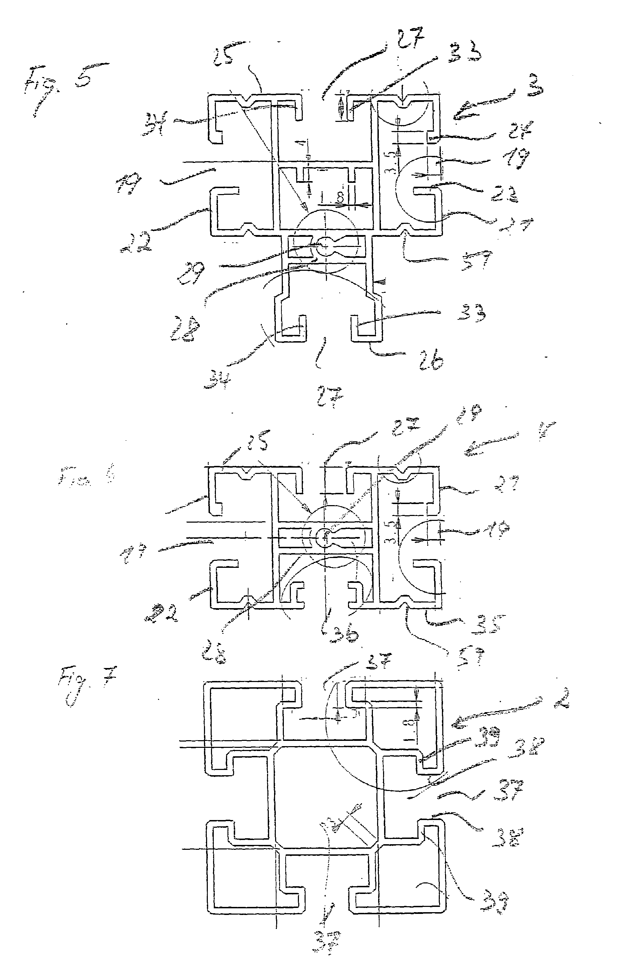

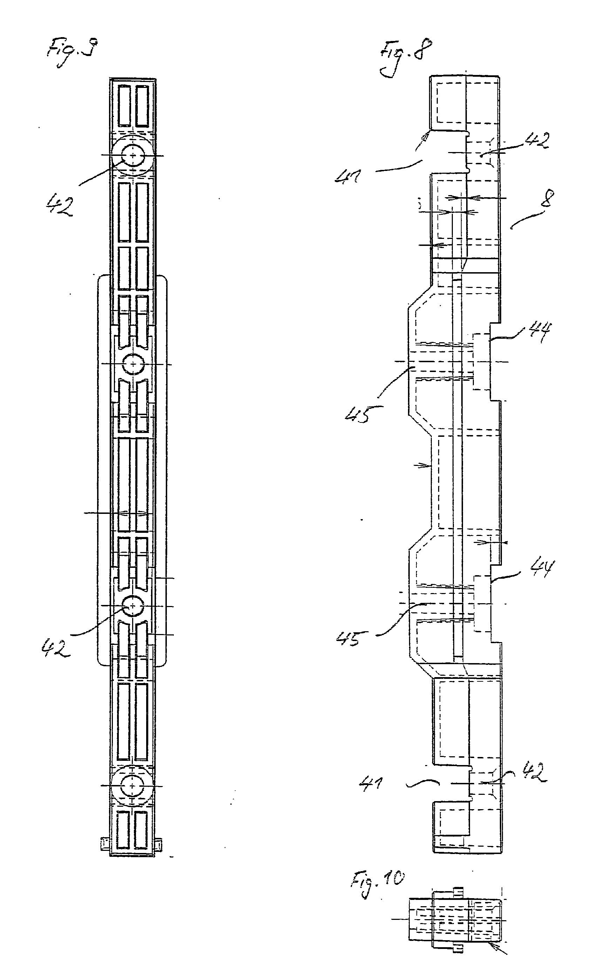

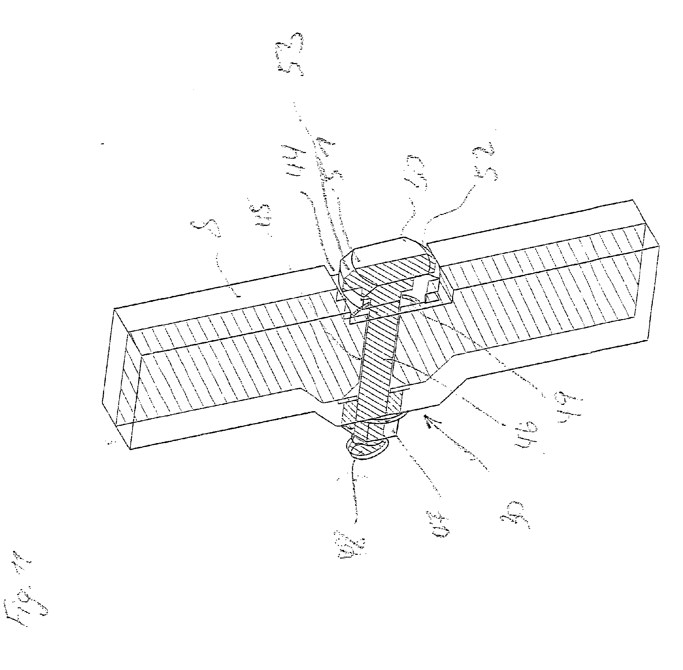

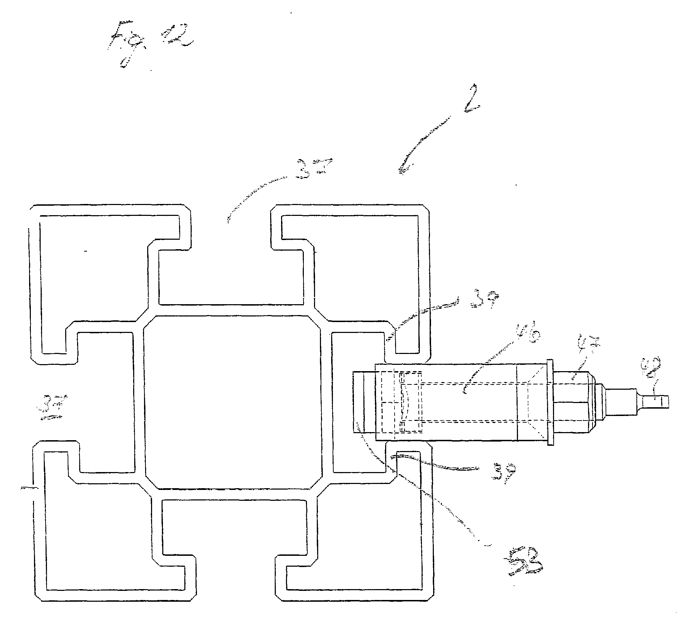

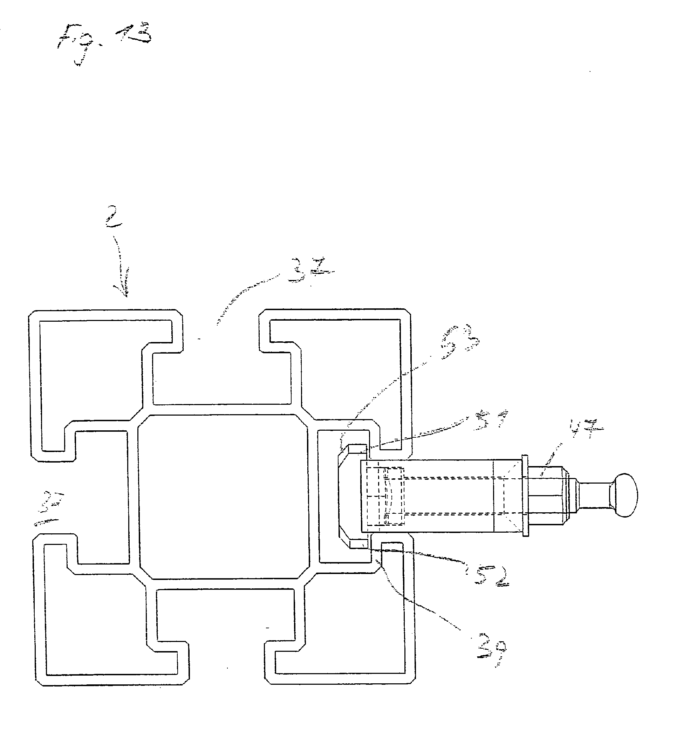

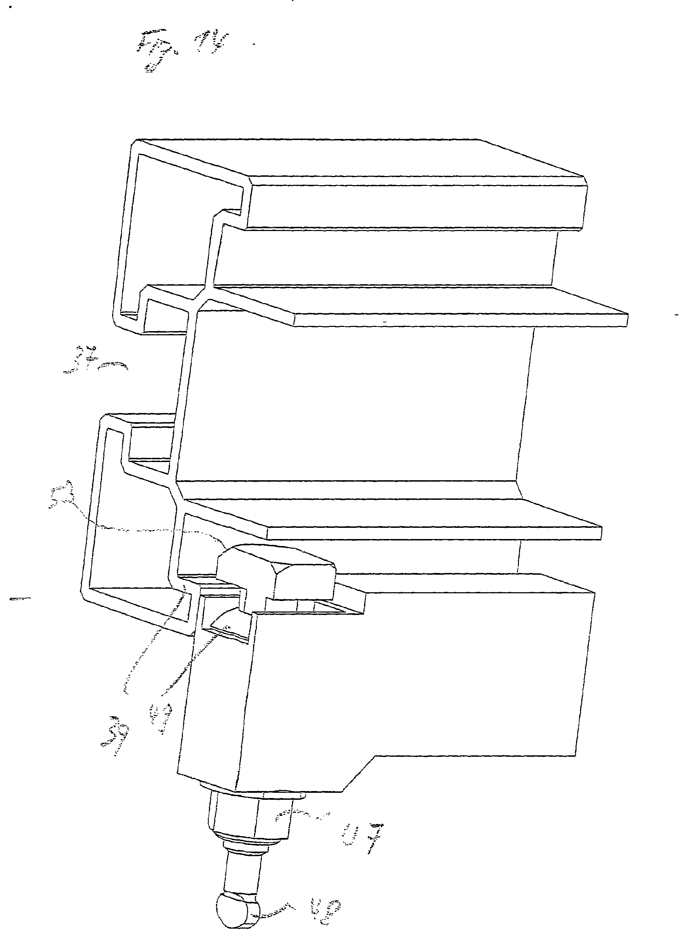

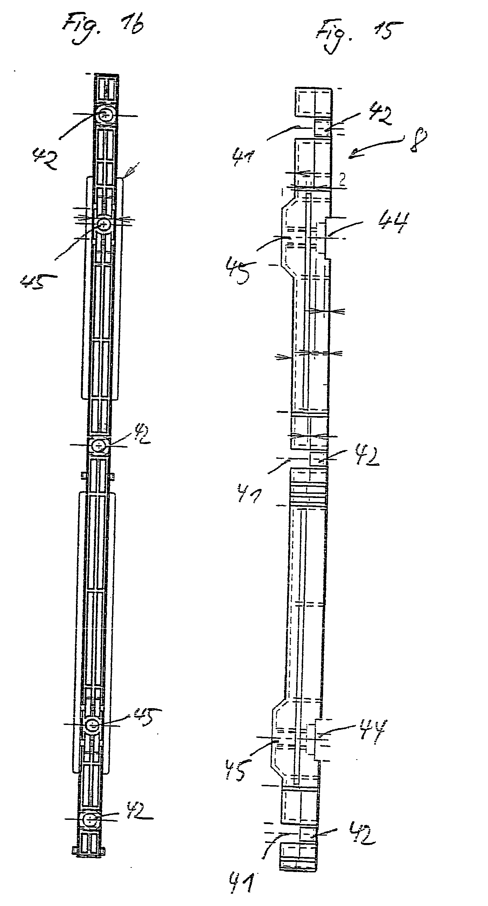

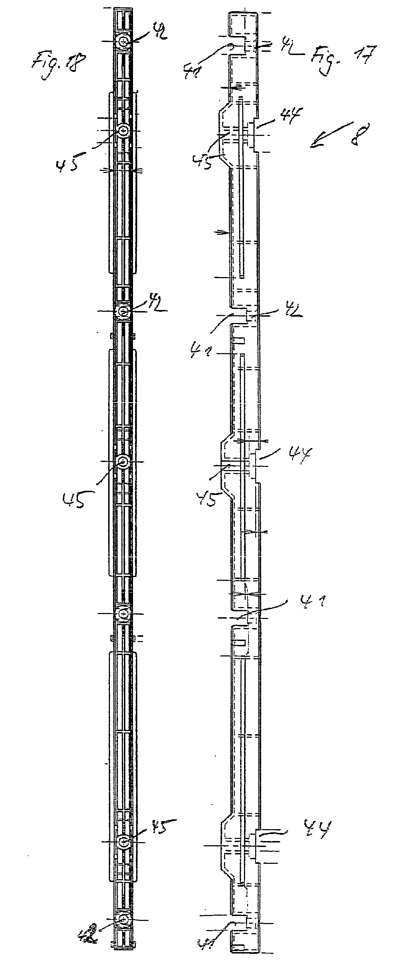

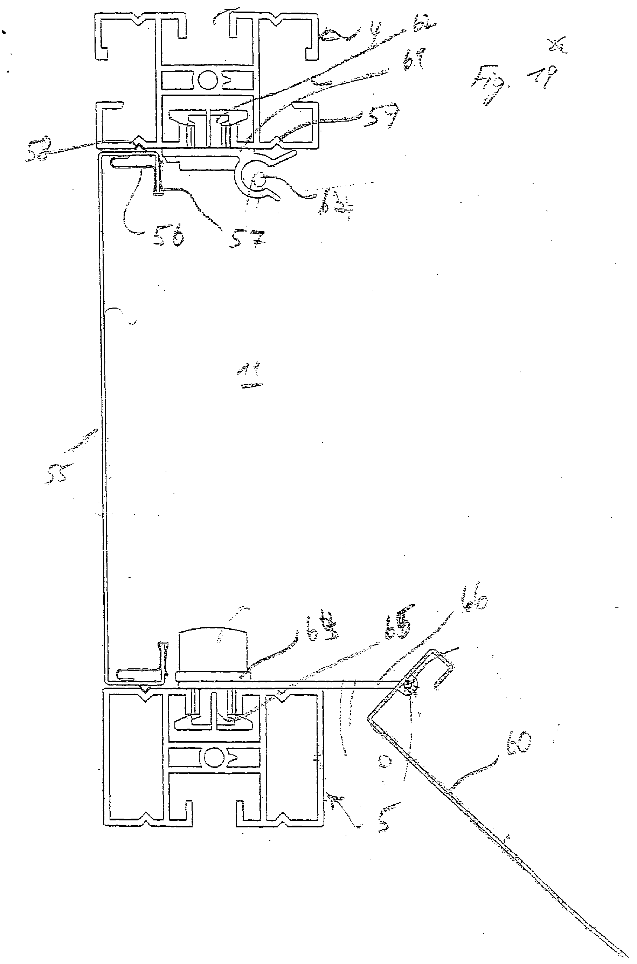

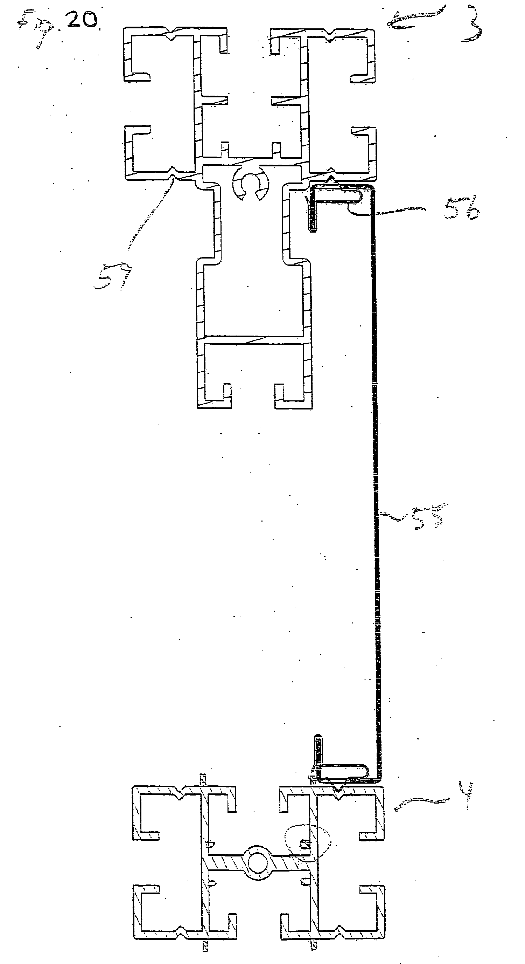

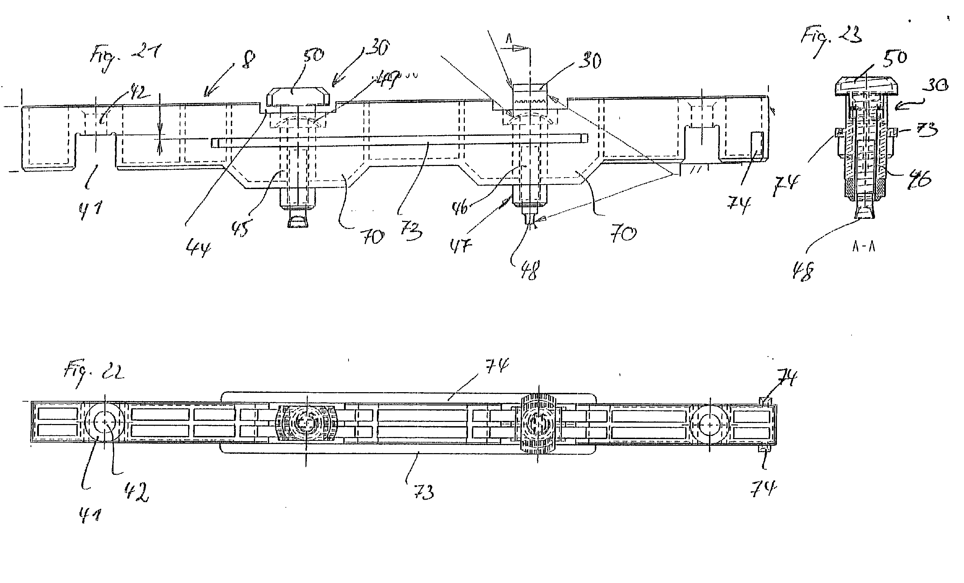

Fig. 2 shows a partition wall element 1 with a fence 9, which is formed from a ribbon 12 from an upper cross-beam 3 and a lower cross-beam 4. Connection to fence 9 is effected via the connecting rods, which are laterally attached to the end faces of cross-beams 3 and 4, with only the left connecting rod 7 being shown in Fig. 2. A quick-action closure element labeled 30 is shown in Fig. 2 that serves to connect the assembly unit formed into a fence to a vertical upright 2. The function and design of the quick-action closure element 30 is described in more detail below.

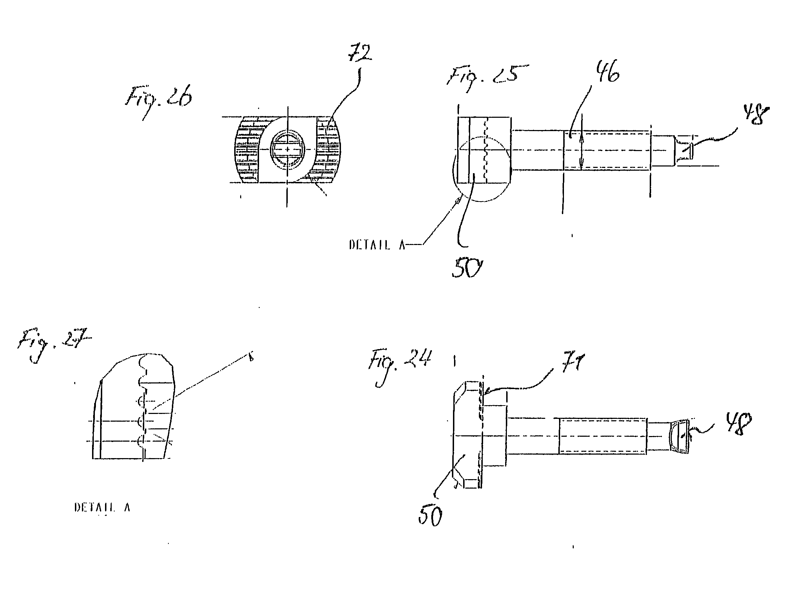

A three-dimensional representation of a corresponding fence 9 with a ribbon 12 is shown in Fig. 3. Fence 9 comprises an upper cross-beam 3 and a lower cross-beam 4, connected to each other at their two end faces by connecting rods 7 and 8 determining the space between the cross-beams. The connecting rods are screwed to the end faces of cross-beams 3 and 4 by screws indicated with 31, for which purpose, as will be described with the aid of Figs. 5 and 6, the cross-beams are provided with corresponding cross webs.

Fig. 4 shows finally a partition wall element 1 with two uprights 2, and a fence 9, which here is formed from two ribbons 11 and 12 by means of cross-beams 3 to 5.

Fig. 5 shows a cross-section of the upper cross-beam 3. As can be seen, the cross-section has a T-shape and is formed as a multi-chamber hollow profile. The side faces 21 and 22 of cross-beam 3 each have a slot 19 along the length of the profile. Slot 19 is limited on the side by inwardly projecting ribs 23 and 24, with the free ends of ribs 23 and 24 forming catch shoulders for attaching further elements of the partition wall system, such as the hook-in element of the shelf brackets with hook-in lip 17 and insert nose 18 described with the aid of Fig. 1. In the case of a shelf bracket, hook-in lip 17 hooks in behind inwardly projecting rib 24, which is formed shorter than rib 23.

Further, the upper side 25 and lower side 26 of cross-beam 3 in turn have a continuous slot 27 along the length of the profile, which finds application for engagement, to be described below, with connecting rods 7, 8. Finally, cross-beam 3 has a cross web labeled 28 that is also formed continuously along the length of the profile and is provided with a bore 29.

Like the profiles shown in Figs. 6 and 7, cross-beam 3 is made by extruding metal, especially aluminium, and specifically with a continuous uniform cross-section, such that the cross-beams can each be cut to suitable length and such that each end face is provided with the corresponding cross-section, i.e. especially slots 27, bore 29 and cross web 28. This is of advantage because it enables the cross-beam to be cut in each case to suitable length from one profile, and the end faces, which serve for engagement with the connecting rods, do not have to be worked separately. As described below, the connecting rods need only be arranged via the end faces and are partly inserted into the profile of the cross-beam and the connection of the connecting rods can be effected by self-tapping screws 31, which communicate with the bores 29 of the cross-beams. Slots 27 on the upper side 25 and the lower side 26 of cross-beam 3 are also limited laterally by inwardly projecting ribs 33 and 34, whose free ends form catch shoulders for fastening clamps still to be described with the aid of Fig. 21.

Fig. 6 shows the cross-section through cross-beams of a fence, which are each positioned beneath an upper cross-beam 3 in T-shape in accordance with Fig. 5. The cross-section of the cross-beam which is visible in Fig. 6 and which may be cross-beam 4, 5 or 6 from Fig. 1 has a multi-chamber hollow profile in square section, and specifically with rectangular cross-section. Since the cross-beams shown in Figs. 5 and 6 have a number of design similarities, the same reference numbers are used for the comparable parts in Fig. 6 as in Fig. 5. As may be seen, provision is made for slots 19 on the two opposite side-walls and a corresponding slot 27 on the upper side 25. Slots 19 and 27 are limited laterally by corresponding inwardly projecting ribs.

As a modification of cross-beam 3 in accordance with Fig. 5, cross-beam 4 does not have a T-shape, but rather the lower side 35 of the beam is formed as a flat surface that nevertheless has a slot 36 having the same width dimensions as slots 19 and 27. Finally, in the center of the profile is a formed corresponding cross web 28 with a bore 29.

Fig. 7 shows the cross-section of_an upright 2, which is formed analogously as a multi-chamber hollow profile and has a square shape with a quadratic cross-section. Slots 37 are formed on all four sides of upright 2, which slots are laterally limited by inwardly projecting walls 38 that are provided with an outwardly projecting offsetting or crimp 39. This slot configuration serves to fasten a fence by its connecting rods 7, 8. The width of slot 37 is equal to the width of slots 27 and 36 and preferably also equal with the width of the slots 19. As can be seen, the profile of the uprights with the four slots on the four side-walls is designed such that partition wall elements or fences can be connected to all four sides by inserting the connecting rods correspondingly. In so far, uprights 2 can be used to form the partition wall elements into a corner or to connect partition wall elements in series along a plane.

As can be seen, the described cross-sections of the cross-beams and their formation as multi-chamber hollow profiles yield a simple and lightweight construction of very great stability, so that the partition wall elements created therefrom are formed correspondingly stiff and load-bearing.

Fig. 8 shows a connecting rod 8 which is formed so as to accommodate two cross-beams to form a fence 9 with a ribbon 12 in accordance with Fig. 3. At both ends of connecting rod 8 is a groove-like recess 41 into which opens an aperture 42 leading to the other side of the rod, which aperture is shown in dotted lines in Fig. 8. In the lengthwise direction of connecting rod 8, each accommodating groove 41 has a width matching the thickness of the cross webs 28 of cross-beams 3 to 6. The width of connecting rod 8, as evident in Fig. 9 and, by analogy, also of connecting rod 7, is sized to the width of slots 27 and 36 on the upper and lower sides of the cross-beams, and specifically sized to fit in such a manner that the connecting rods can be partially inserted into the end faces of the cross-beams, as is best seen in Fig. 3. The connecting rods with their accommodating grooves 41 overlap the cross webs 28 of cross-beams 3 and 4 and, as can be seen, connecting rods 8 are partially inserted into the end faces. Connection with the cross-beams is effected by self-tapping screws 31, which grip through apertures 42 and can be screwed into the bores 29 of the cross-beams. The unit formed as a result can be fastened to the uprights, and specifically again in the manner of an engagement connection on account of the rods 7 and 8 projecting partially over the end faces of the cross-beams in accordance with Fig. 3. Here, too, the connecting rod is introduced snugly into slots 37 of the vertical uprights 2, as best evident from Figs. 1 and 4 for the uprights 2 shown on the right. Fastening of said fence at the uprights is preferably made via quick-action closure elements to be described later on. Thus a partition element can quickly and easily be mounted.

Generally, the connection of rods 7 and 8 with uprights 2 is effected by suitable connecting means, with quick-action closure elements 30 finding preferred application in the embodiments illustrated. To accommodate these quick-action closure elements 30, the connecting rod 8 shown in Fig. 8 has on the side opposite the grooves 41 two grooves 44, which serve to accommodate a locking head 50 of the quick-action closure element 30 evident from Fig. 11. Fig. 8 shows two grooves 44 for accommodating two quick-action closure elements, with groove 44 being connected through apertures 45, which are shown in dotted lines in Fig. 8, to the opposite side of connecting rod 8 that bears grooves 41.

Fig. 11 shows purely schematically a section of a connecting rod, in this case connecting rod 8 with an accommodated quick-action closure element 30, which has a shaft 46 extending through aperture 45 into groove 44, which shaft is provided with a thread on the left section for the purpose of interacting with a nut 47 and finally with a shaped adjusting handle 48 after nut 47 has been screwed on said adjusting handle having a portion formed by shaping a deformation with a dimension bigger than the diameter of the nut bore. Thus the nut 47 is unreleasably attached on the bolt or shaft, preferably the shaft 46 is a forged part and the locking head 50 arranged opposite of the adjusting handle 48 is unitarily arranged at the shaft 46. Therefore the quick-action closure elements 30 are unreleasably mounted on the connection roads and will be supplied together with the connection roads.

As may be seen from Fig. 11, between the base of groove 44 and locking head 50 is a spring 49, which presses the locking head outwards from the base of the groove 44. With insertion of connecting rod 8 or the section of a connecting rod projecting out from the end faces of the cross-beams of a fence into the corresponding slot 37 of an upright 2, the locking head reaches in behind the crimps 39 contiguous with the slot walls 38. Since the narrow side of the locking head is smaller than the width of slot 37, alignment of the locking head 50 in the position shown in Fig. 11 enables it to be guided without further ado through slot 37 with insertion of connecting rod 8. If shaft 46 along with the molded-on or positioned locking head 50 is turned through 90°, then locking head 50, which is longer than slot 37 is wide, hooks in behind crimps 39 by means of its end sections 51 and 52. When nut 47 is screwed on, locking head 50 is clamped against crimps 39, and specifically against the pre-tension of the spring 49, such that connecting rod 8 is clamped firmly against upright 2. For facilitating the insertion into the slots 37 of the cross-beams, the end sections 51 and 52 of locking head 50 are provided with leading tapers 53.

The mode of action of the quick-action clamp element is best understood by comparing Fig. 12 with Fig. 13, where Fig. 12 shows the insertion position of the quick-action clamp element into slot 37 of an upright 2, with locking head 50 aligned in accordance with the position in Fig. 11. Fig. 13 shows the quick-action clamp element after rotation through 90°, with the two end sections 51 and 52 of locking head 50 hooking in behind crimp 39. If nut 47 is tightened, locking head 50 is clamped against crimps 39.

Conversely, the quick-action clamp elements can also be loosened readily. To this end, nut 47 has to be unscrewed from shaft 46, which can then be turned with the aid of handle 48. As best understood by comparing Fig. 12 with Fig. 13, the handle has the form of an adjusting handle such that it simultaneously defines the position of the locking head so that the precise locking position or the opening position is identifiable without further ado from the outside.

Figs. 15 and 16 finally show a further connecting rod 8, which, however, in the embodiment shown, is formed for making a fence from two ribbons, as is evident, for example, from Fig. 4. In other words, connecting rod 8 in accordance with Fig. 15 connects three cross-beams with each other to make a fence, which is why three corresponding spaced grooves 41 are formed for bridging the cross webs 28 in the cross-beams when the connecting rod 8 is inserted. Otherwise, connecting rod 8 is formed, however, by analogy with the connecting rod in accordance with Figs. 9 to 10, whereby, for each ribbon, i.e. between two grooves, in contrast to Figs. 8 and 9, provision is made for only one groove 44 and apertures 45 for accommodating a quick-action closure element 30. In this case, two quick-action closure elements 44 are sufficient to provide a firm and secure connection between the fence, consisting of two ribbons, and the corresponding uprights 2. Since, in the embodiment of a connecting rod in accordance with Fig. 8, a fence is formed with one ribbon, attachment of the fence to the uprights requires two grooves and apertures 45 for accommodating two quick-action closure or clamp elements, to effect a firm connection of the connecting rod to the uprights.

The embodiment of a connecting rod 8 in accordance with Figs. 17 and 18 shows a connecting rod that serves to connect four cross-beams 3 to 6 in accordance with the embodiment of Fig. 1, i.e. forms a fence 9 with three ribbons 10 to 12. Connecting rod 8 accordingly has four grooves 41 for bridging the cross webs 28 of the cross-beams for the purpose of end-face connection and three accommodating grooves 44 and apertures 41 between each of two grooves 41 for each to accommodate a quick-action closure element.

Fig. 19 finally shows the fastening of panels to two cross-beams 4 and 5 of a ribbon, whereby, to simplify the drawing, the connecting rods and the vertical uprights are not visible. On the left side of ribbon 11, a U-shaped panel 55 is inserted between cross-beams 4 and 5 and held by clips 56, which are attached by a clip pocket 57 to an inwardly crimped end flange of panel 55. Clips 56 penetrate with a V-shaped snap-in projection 58 a corresponding aperture in the lateral panel flange and interact with a bead-like groove 59 with V-shaped cross-section on the upper and lower sides of cross-beams 4 and 5, as a result of which a clip-on connection for panel 55 is formed.

On the right-hand side, the gap between cross-beams 4 and 5 is bridged and closed to the front by a cover labeled 60, which is shown in folded-out position in Fig. 19. Cover 60 is fastened to the upper cross-beam 4 by a fastening clamp generally labeled 61, which is inserted into a slot 36 of cross-beam 4 by a fastening shoe 62 and is held there and which, via clip part 63, keeps the upper end of cover 60 in its flapped-up position.

Fig. 19 also shows a fastening clamp 64, which is inserted via slot 27 into the lower cross-beam 5, which is fitted with a corresponding fastening shoe 65, whose narrow side fits through slot 27 and whose long side is longer than the width of the slot. Fastening clamp 64 holds cover 60 via a fastening clamp 66, not described in further detail, to which the cover is articulated.

Fig. 20 finally shows the attachment of a panel 55 between an upper cross-beam 3 and a lower cross-beam 4, with, in accordance with Fig. 20, the lower side of cross-beam 3 being fitted with corresponding bead-like grooves 59 for the formation of a snap-in connection with corresponding fastening clips 56, to enable the cover panel 55 that bridges the gap between two adjacent cross-beams to be fastened. As can be seen, the main surface of panel 55 closes flush with the side walls of the upper and lower cross-beams 3 and 4. By contrast, in the embodiment in accordance with Fig. 19, cover 60 is clearly offset to the front, such that the space between adjacent cross-beam is increased outwards, so that cover 60, which can fold down, creates stowage space for cables and the like.

For better clarification the embodiment according to fig. 21 to 23 shows a connecting rod 8 according to the embodiment of fig. 8 and 9, however henceforth with therein unreleasably taken up quick-action closure elements 30. Hereby two quick-action closure elements 30 are used for this embodiment that serves as connecting rod for forming a ribbon with two cross-beams. To increase the stiffness hereby those regions of connecting rod 8 with the recesses 44 and apertures 45 for taking up quick-action closure elements are widened and supported by a flange-like shoulder to thicken said connecting rod 8 in these regions. From fig. 21 the tension spring 49 can also be seen quite clearly, which pushes locking head 50 towards the outside so that said locking head can grip into the groove located behind the slot of a cross-beam, as it can be seen quite clearly from fig. 12 and 13 and is also explained in this context. The closure element 30 described on the right in fig. 21 is shown in a locking position. Said locking position is also illustrated by the widened handle 48, which unreleasably holds the nut 47 onto the shaft 46 of quick-action closure element 30.

In fig. 24 to 27 an embodiment of a quick-action closure bolt of a quick-action closure element is described, whereby it is obvious that the locking head 50 is provided with a grooving 72, ribbing or the like corrugation, as seen in detail in fig. 27, on its contact surface 71, with which the locking head 50 grips behind the crimp 39 according to fig. 13. Said grooving comprises projections and recesses, whereby the friction engagement respectively insertion between the contact surface 71 and the crimp 39, which is limiting slot 37 of the upright, is increased.

Finally, from fig. 21 and 22 a longitudinal stop shoulder 73 and 74 can be seen, which is provided on both sides of connecting rod 8 and which is provided in the region of the recesses 44 for quick-action closure elements 30. Said stop shoulder 73 is abutting to the corresponding outer surface of the upright while quick-action closure elements are fastened, to prevent deflection of connecting rod 8 under corresponding tension. Said stop shoulders 73 are also realized in the embodiments of connecting rods according to fig. 15 to 18. From fig. 21 to 23 furthermore result spigots 74 provided on both sides on one end portion of the connecting rod, said spigots serving for correct mounting of each fence with one to three ribbons in the uprights, so that e.g. the upper end portion of the connecting rods is upwardly directed during assembly and that the fence is mounted correctly, meaning not with its upper end downwardly directed.

Since the cross-beams and the uprights are preferably made by extrusion from metal, especially aluminium, these each have the same cross-section along their length, as was explained with the aid of Figs. 5 to 7. In other words, the cross-beams and the uprights can be cut into lengths or cut off and still each have the same end-face mechanism for connection with the connecting rods. For this reason, the length of the uprights, which determines the working height of the partition wall elements, can be set to any value, a fact which also applies to the length of the cross-beams. Nonetheless, in a practice-oriented embodiment of the system, the cross-beams are made available in lengths between 800 and 2400 in gradations of 200 mm and the uprights are available in the range 900 to 1100 mm and in lengths of 2200 to 2400 mm. The width of ribbons 10 to 12, formed by two spaced cross-beams joined with lateral rods, is preferably 200 mm.

Especially in the case of uprights of length 900 to 1100 mm, partition wall elements can be implemented at a height whose fence or ribbons for accommodating shelf brackets, folding covers, sliding tables and the like are arranged in a working height that is suitable for a person working at a table. The partition wall system is therefore especially suitable for open-plan offices in which work is divided into groups and teams, as these partition wall elements can on one hand accommodate system units, such as shelf brackets and the like, that are needed for office work and, on the other, permit communication within the group via the partition wall elements.

## Claims

1. Partition wall system for offices and the like based on laterally closable partition wall elements (1), each of which is formed from two uprights (2) and cross-beams (3-6) that interconnect them, which are formed of hollow profiles, particularly formed by multi chamber profiles, **characterized by the fact that** at least a part of the cross-beams (3-6) of the system is connectable on both sides of its end-faces to lateral connecting rods to form a self-contained assembly unit (so-called fence) (9), which may be releasably fastened to adjacent uprights (2) via said lateral connecting rods (7, 8) and has at least one ribbon (10-12) defmed by two adjacent cross-beams and that the uprights (2) are provided with slots (37) continuous over the length for accommodating connecting rods, into which slots the connecting rods (7, 8) are insertable.

2. System of Claim 1, **characterized by** the fact that the fence (9) has several ribbons (10-12) spaced above each other, of which two adjacent ribbons are each connected by a common cross-beam, with the ribbons on both sides being combined by the lateral connecting rods (7, 8) to form the assembly unit.

3. System of Claim 1 or 2, **characterized by the fact that** the fence (9) has one to three ribbons (10-12).

4. System of any of Claims 1 to 3, **characterized by the fact that** the cross-beams (3-6) are formed as multi-chamber hollow profiles and whose opposite side-walls (21, 22) are provided with slots (19) extending the length of the profiles.

5. System of Claim 4, **characterized by the fact that** the cross-beams (3-6) have slots (27, 36) on the upper and lower sides (25, 26, 35).

6. System of Claim 4 or 5, **characterized by the fact that** the slots (19, 27, 36) are limited by inwardly projecting webs, whose free ends form catch shoulders.

7. System of any of the previous Claims, **characterized by** the fact that the cross-beams have on their upper and lower sides on both sides of the slot bead-like and preferably V-shaped grooves (59) that are formed continuously along the length of the profiles.

8. System of any of the previous Claims, **characterized by** the fact that a part of the cross-beams is formed as square profiles with rectangular cross-section and a part of the cross-beams as multi-edged profiles with T-shaped cross-section and that the insides of the profiles also have a continuous cross web (28) along the length of the profiles with a central bore (29) for connecting with rods (7, 8).

9. System of any of the previous Claims, **characterized by the fact that** the uprights (2) are formed as multi-chamber hollow profiles and have on each side-face a continuous slot (37) extending along the length of the profile, which slot (37) is preferably limited by inwardly projecting webs (38), which form catch shoulders (39) on the inside for fastening elements.

10. System of any of the previous Claims, **characterized by the fact that** connecting rods (7, 8) for connecting the cross-beams (3-6) into an assembly unit (9) are sized in their width to the width of the slots (27, 36) on the upper and lower sides of the cross-beams and the rods are provided with recesses (41), which are spaced according to the width of a ribbon (10-12) and along the length of the rod (7, 8) have a width adapted to the thickness of the cross webs (28), such that the rods (7, 8) for connecting the cross-beams (3-6) into an assembly unit are partially insertable into the end faces of the cross-beams (3-6), with the rods (7, 8) partially gripping into the slots (27, 36) on the upper and/or lower side (25, 26, 35) of the cross-beams and their recesses (41) overlap the cross webs (28) of the cross-beams (3-6).

11. System of Claim 10, **characterized by the fact that** the width of the slots (37) of the uprights (2) are adjusted to the width of the rods (7, 8) such that the rods engage with the slots (37) of the uprights (2) in the fastening position of the assembly unit (9) on the uprights (2).

12. System of Claim 11, **characterized by the fact that** the width of the slots (37) of the uprights (2) corresponds to the width of the slots (27, 36) of the upper and lower sides of the cross-beams (3-6) and the width of the rods (7, 8) is adjusted to the slot width, such that the rods (7, 8) fit, i.e. may be inserted without lateral play into the slots (27, 36, 37).

13. System of any of the previous Claims, **characterized by** the fact that the rods (7, 8) are connectable by means of closure elements, particularly quick-action closure elements (30) preferably through clamping action with the uprights (2).

14. System of Claim 13, **characterized by** the fact that the quick-action closure elements (30) have a locking head (50), whose narrow side is shorter than the width of the slots (37) of the uprights (2) and whose long side is longer than the width of the slots (37) of the uprights (2), such that the locking heads (50) of the quick-action closure elements may be introduced into the slots (37) of the uprights via their narrow sides and may be locked following rotation relative to the slots (37).

15. System of Claim 14, **characterized by the fact that** clamping of the locking heads (50) is effected by spring pretension (49) or by clamping cam with leading taper and that a screw joint is provided for applying the clamping force.

16. System of any of Claims 13 to 15, **characterized by the fact that** the quick-action closure element has a screw bolt (46), which penetrates an aperture (45) in the connecting rod (7, 8) and has a locking head (50) at one end, with the rods for accommodating the locking heads (50) being provided with grooves (44) into which the apertures (45) for the screw bolts (46) open, which project into the grooves (44) with the positioned locking heads (50), with the screw connection in each case being effected by a nut (47) which is mounted on the screw bolt (46) on the side of the connecting rod (7, 8) opposite the locking head (50).

17. System of Claim 15 or 16, **characterized by the fact that** the screw bolt (46) has a rotating handle (48) on the end opposite the locking head (50), which rotating handle (48) is aligned with the locking head (50) such that the rotational position of the rotating handle (48) also indicates the rotational position of the locking head (50).

18. System of any of the previous Claims, **characterized by** the fact that at least one of the uprights has a length that is matched to the work-handling area of a person working at a table in front of the partition wall element or sitting on a chair, preferably a length ranging from 800 to 1200 mm, especially preferably from 900 to 1100 mm.

19. System of any of the previous Claims, **characterized by the fact that** the cross-beams (3-6) of the system are of a length ranging from 800 to 2400 mm, especially in gradations of 200 mm.
